# EUROPEAN PATENT APPLICATION

(11) **EP 4 257 284 A1**
(43) Date of publication of application: **11.10.2023**
(21) Application number: 21903584.7
(22) Date of filing: 14.09.2021
(51) Int. Cl.: B23Q 3/06, B25B 1/20, B25B 1/24, B23Q 11/00

(54) **DEVICE FOR AUTOMATICALLY FIXING WORKPIECE**

(30) Priority: 07.12.2020 KR 20200169640
(71) Applicant: Matinprout Co., Ltd., Seoul 06372 (KR)
(72) Inventor: LIM, Sun Ho, Asan-si Chungcheongnam-do 31533 (KR); LIM, Jae Hee, Cheonan-si Chungcheongnam-do 31172 (KR)
(74) Representative: Patentanwälte Vollmann Hemmer Lindfeld Partnerschaft mbB
(86) International application number: PCT/KR2021/012496
(87) International publication number: WO 2022/124537

(57) **Abstract**

Provided is a device for automatically fixing a workpiece. The device for automatically fixing a workpiece includes a jig base provided in one side of a device table, and forming a place where the workpiece is placed and fixed to be machined into a finished product, a hole clamp coupled to the jig base and inserted into a hole formed in the workpiece placed on the jig base to selectively clamp the hole, and a clamp driving portion provided on the device table, connected to the hole clamp, and driving the hole clamp to clamp or unclamp the hole of the workpiece.

## Description

### TECHNICAL FIELD

The present inventive concept relates to a device for automatically fixing a workpiece, and more particularly, to a device for automatically fixing a workpiece, which may automatically implement a workpiece placing and fixing task to place and fix a workpiece at a machining position, away from an existing manual work, and thus, the overall automation of a workpiece machining process linked with a machine tool is possible, thereby contributing to the enhancement of productivity.

### BACKGROUND ART

A machine tool collectively refers to cutting, lathing, hole machining, drilling, screw machining, grinding, and the like of a workpiece, for example, a metal workpiece, by using a certain cutting tool. A typical machine tool is a lathe, and recently, the use of a machine tool such as a machining center providing various functions has been increased.

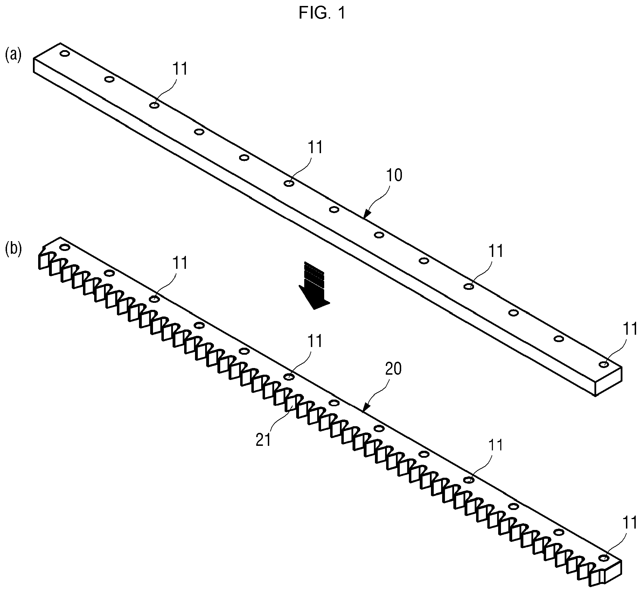

For example, as illustrated in (b) of FIG. 1, a finished product 20 that is a rack in which a thread portion 21 of a pin type is formed in one side surface thereof may be made by using a machine tool. To make such a finished product 20, first, a workpiece 10 that is a raw material, as illustrated in (a) of FIG. 1, is placed and fixed at a machining position of a machine tool.

As such, to place and fix the workpiece 10 at the machining position of a machine tool, a placing and fixing task of the workpiece 10 is performed considering various conditions, such as precision, straightness, parallelism, and the like, and then, a rack that is a high precision product as illustrated in (b) of FIG. 1.

Conventionally, the placing and fixing task of the workpiece 10, that is, the workpiece 10 as illustrated in (a) of FIG. 1 is placed and fixed at a machining position, has been performed only manually. In this case, it is problem that a work time takes too long. The time for performing the placing and fixing task of the workpiece 10 may be slightly reduced when the task is performed by a skilled worker, even so, it is difficult to fully address the limitations in the manual work.

Actually, to improve productivity of the finished product 20 as illustrated in (b) of FIG. 1, it is expected that automation of a series of entire processes, for example, a machining process is performed on the workpiece 10 after being placed and fixed at a machining position, and the like, may be necessary. However, when the placing and fixing task of the workpiece 10 is dependent on the manual work as before, implementation of automation will not be easy. Even when the automation is implemented, considering that an overall tact time increases so that productivity is reduced, there is a need to develop technology for a new concept device for automatically fixing a workpiece that has not been previously known.

### DETAILED DESCRIPTION OF THE INVENTIVE CONCEPT

### TECHNICAL PROBLEM

Provided is a device for automatically fixing a workpiece, which may automatically implement a workpiece placing and fixing task to place and fix a workpiece at a machining position, away from an existing manual work, and thus, the overall automation of a workpiece machining process linked with a machine tool is possible, thereby contributing to the enhancement of productivity.

### ADVANTAGEOUS EFFECTS

According to the present inventive concept, a workpiece placing and fixing task to place and fix a workpiece at a machining position may be automatically implemented, away from an existing manual work, and thus, the overall automation of a workpiece machining process linked with a machine tool is possible, thereby contributing to the enhancement of productivity.

### DESCRIPTION OF THE DRAWINGS

FIG. 1 is a view illustrating an example of a workpiece and a finished product.
FIG. 2 is a perspective view of a device for automatically fixing a workpiece, according to an embodiment of the present inventive concept.
FIG. 3 is a view illustrating FIG. 2 from a different angle while separating a workpiece cleaning unit.
FIG. 4 is a partially cut-away perspective view of a jig base region.
FIG. 5 is an enlarged view of a major part of FIG. 4.
FIG. 6 is an enlarged view of a major part of FIG. 5.
FIG. 7 is an enlarged view of a hole clamp and clamp driving portion region of FIG. 6.
FIG. 8 is a partial cross-sectional view of FIG. 7, showing a state in which a workpiece is placed on a base state.
FIG. 9 is an enlarged view of a major part of FIG. 8, showing a workpiece unclamping state.
FIG. 10 is a cross-sectional view of a multi-divided jaw region of FIG. 9.
FIG. 11 is an enlarged view of the major part of FIG. 8, showing a workpiece clamping state.
FIG. 12 is a cross-sectional view of a multi-divided jaw region of FIG. 11.
FIG. 13 is a control block diagram of a device for automatically fixing a workpiece, according to an embodiment of the present inventive concept.
FIGS. 14 to 22 show an operation sequence of a device for automatically fixing a workpiece, according to an embodiment of the present inventive concept.

### BEST MODE

According to an aspect of the present inventive concept, a device for automatically fixing a workpiece includes a jig base provided in one side of a device table, and forming a place where the workpiece is placed and fixed to be machined into a finished product, a hole clamp coupled to the jig base and inserted into a hole formed in the workpiece placed on the jig base to selectively clamp the hole, and a clamp driving portion provided on the device table, connected to the hole clamp, and driving the hole clamp to clamp or unclamp the hole of the workpiece.

The hole clamp may include a clamp shaft arranged on the jig base in a direction in which the workpiece is placed and having a cross-sectional area differing in the lengthwise direction, and multi-divided jaws (3-jaw) arranged in a circumferential direction of the clamp shaft, moving radially outward or inward based on an up/down movement operation of the clamp shaft by an operation of the clamp driving portion, and fixing a position of the workpiece when moving radially outward.

The clamp shaft may include a reduced diameter section part having a relatively small cross-sectional area, an enlarged diameter section part arranged apart from the reduced diameter section part in the lengthwise direction of the clamp shaft and having a cross-sectional area greater than a cross-sectional area of the reduced diameter section part, and a slope connection section connecting the reduced diameter section part and the enlarged diameter section part to be inclined with each other, an inner wall of each of the multi-divided jaws may include a straight line wall part in contact with the reduced diameter section part, and an inclined line wall part in contact with the slope connection section, and the position of the workpiece may be fixed when the enlarged diameter section part of the clamp shaft enters the inclined line wall part of each of the multi-divided jaws as the clamp shaft moves up by the operation of the clamp driving portion.

The hole clamp may further include a guide cap provided in an end portion of the clamp shaft and guiding the clamp shaft to be inserted into the hole of the workpiece, and a clamp end cap movably supporting the multi-divided jaws at an opposite side of the guide cap.

The hole clamp may further include a clamp housing arranged radially outside the multi-divided jaws, fixed on the jig base, and movably supporting the multi-divided jaws with the clamp end cap, an O-ring arranged between the multi-divided jaws and the clamp housing, and an adaptor detachably connecting the clamp shaft to the clamp driving portion.

The device may further include a positioning pin that is coupled to the jig base around the hole clamp and performs positioning a relative location of the workpiece with respect to the jig base when the workpiece is placed on the jig base.

The device may further include a guide pin arranged on the jig base to be capable of moving up/down around the hole clamp, and guiding a movement of the workpiece with respect to the jig base, and a guide driving portion provided on the device table, connected to the guide pin, and driving the guide pin up/down.

The device may further include an adhesion degree detection portion that is provided in a region of the jig base, and before a machining work of the workpiece is performed, detects a degree of adhesion of the workpiece to the jig base.

The adhesion degree detection portion may include an air leakage hole formed in the jig base in a direction in which the workpiece is placed on the jig base, an air supply portion supplying air to the air leakage hole, and an air discharge amount detection sensor detecting an amount of air discharged through the air leakage hole.

The adhesion degree detection portion may further include a controller that is configured to control an operation of a machine tool that machines the workpiece, to be forcibly stopped, based on a sensing signal of the air discharge amount detection sensor.

The device may further include a workpiece pressing unit that is arranged in one side of the device table and presses the workpiece toward the jig base before the workpiece is clamped and fixed on the jig base.

The workpiece pressing unit may include a workpiece pressing block substantially contacting the workpiece and pressing the workpiece toward the jig base, and a block up/down driving portion connected to the workpiece pressing block and driving the workpiece pressing block up/down.

The device may further include a workpiece cleaning unit that is arranged adjacent to the workpiece pressing unit, and cleans the workpiece or a finished product formed from the workpiece by blowing air toward the workpiece or the finished product.

The workpiece cleaning unit may include an air supply pipe arranged elongated in the lengthwise direction of the jig base and supplying the air, and a plurality of air nozzles provided in the air supply pipe and blowing the air flowing in the air supply pipe toward the workpiece.

The device may further include a unit mounting plate on which the workpiece pressing unit and the workpiece cleaning unit are mounted together, and a mounting plate moving portion provided on the device table, connected to the unit mounting plate, and moving the unit mounting plate on the device table.

The device may further include a unit separation support that has one end portion fixed on the unit mounting plate and the other end portion connected to the workpiece cleaning unit, and supports the workpiece cleaning unit apart from the unit mounting plate with the workpiece pressing unit therebetween.

The mounting plate moving portion may include a rail provided on the device table in a direction in which the unit mounting plate moves and to which the unit mounting plate is movably connected, a moving block connected to the unit mounting plate, and a forward and backward driving cylinder coupled to the device table, connected to the moving block, and providing a driving force to move the unit mounting plate on the rail.

The device may further include a base cover covering a top portion of the device table, except the jig base, and a plurality of side covers arranged at opposite sides of the base cover and forming a processing space with the base cover.

Both sides of the base may cover form inclined slopes, and the device table may be mounted on a bed of a machine tool.

### MODE OF THE INVENTIVE CONCEPT

In order to fully understand the operational advantages of the present inventive concept and the objectives achieved by the implementation of the present inventive concept, the accompanying drawings illustrating preferred embodiments of the present inventive concept and the contents described in the accompanying drawings are referred to.

Hereinafter, the inventive concept will be described in detail by explaining preferred embodiments of the inventive concept with reference to the attached drawings. In the following description, when detailed descriptions about related well-known functions or structures are determined to make the gist of the disclosure unclear, the detailed descriptions will be omitted herein.

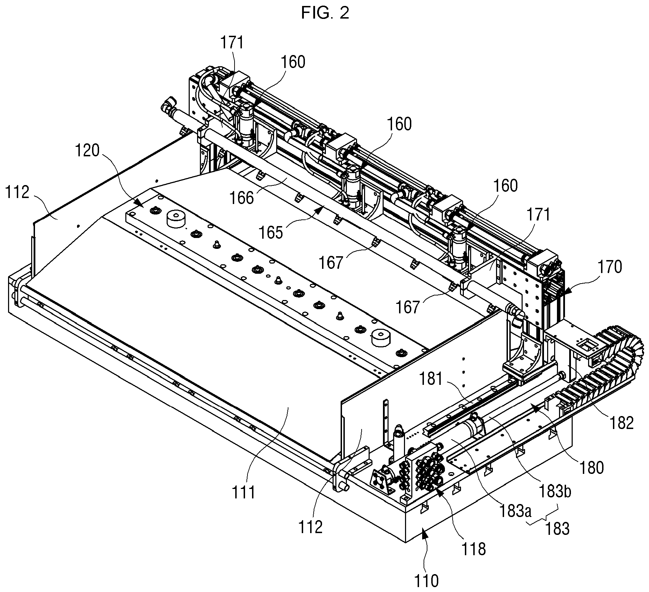

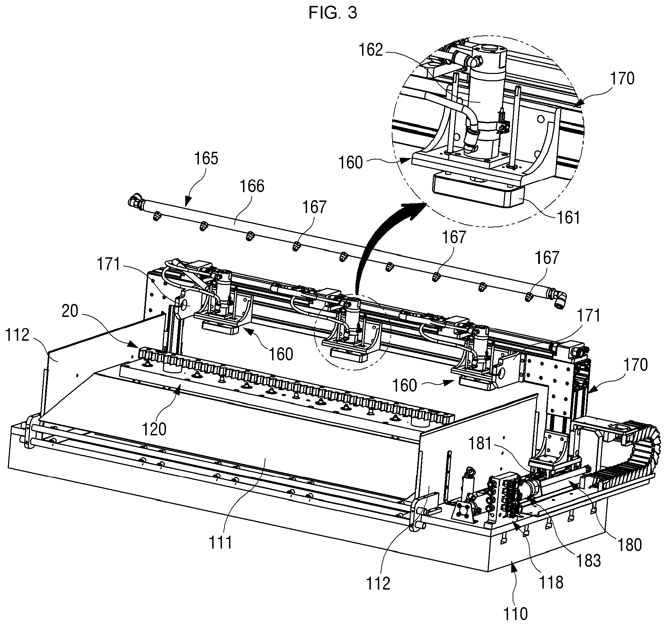

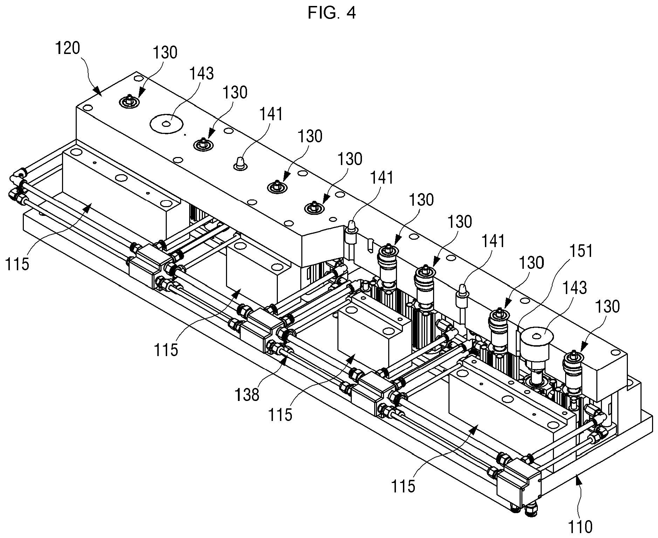

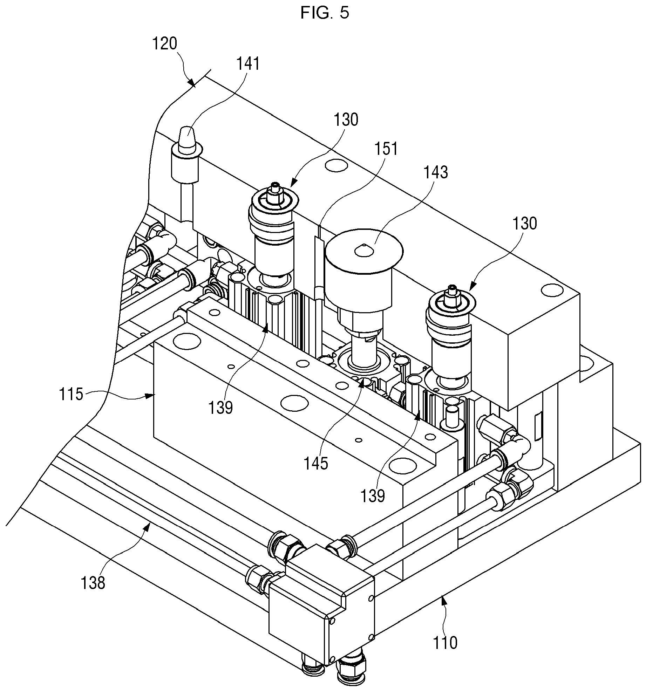

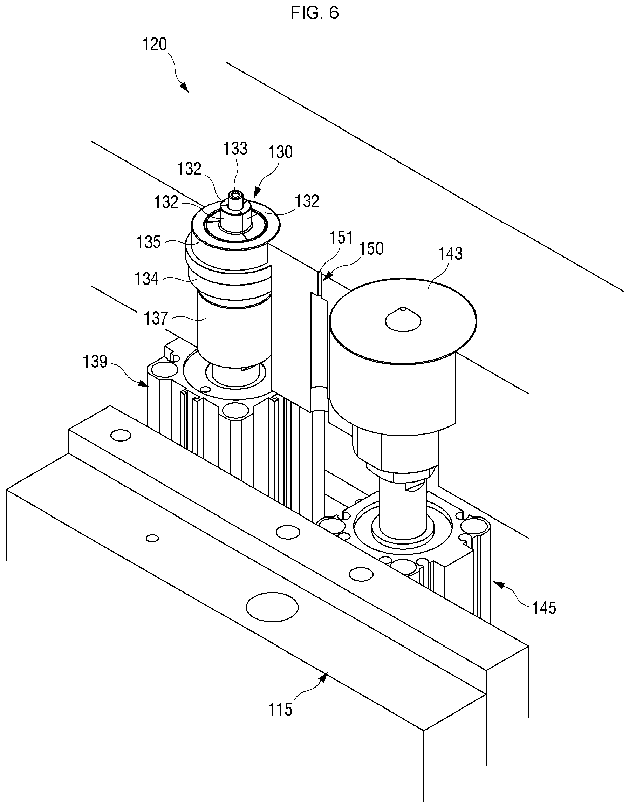

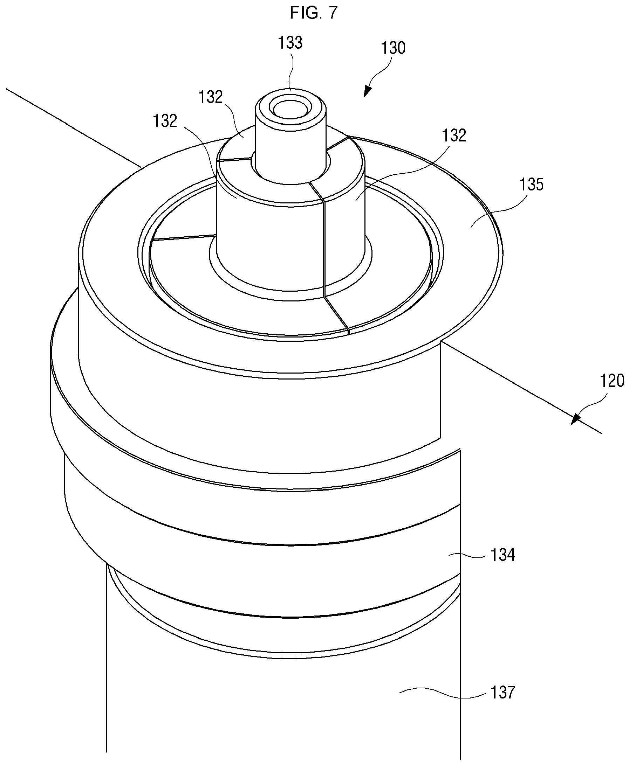

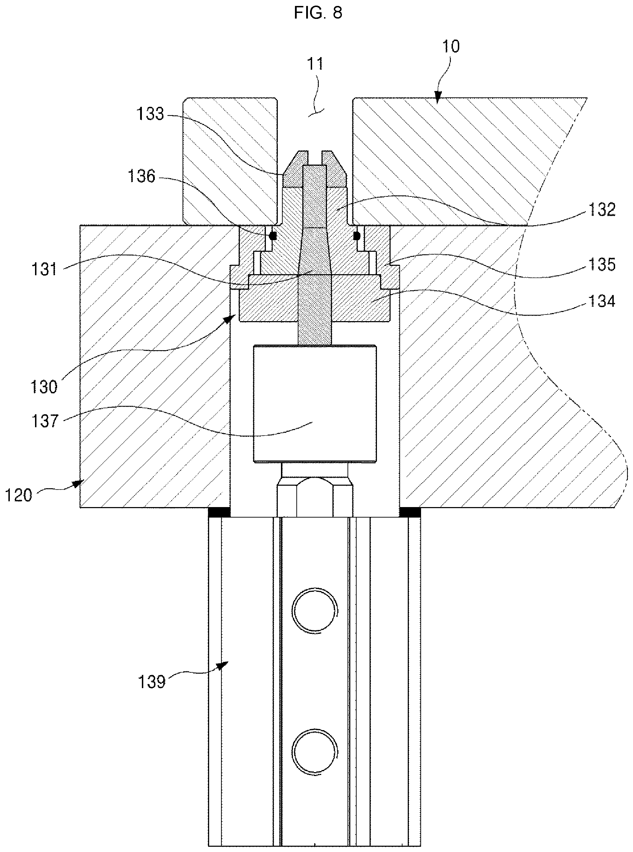

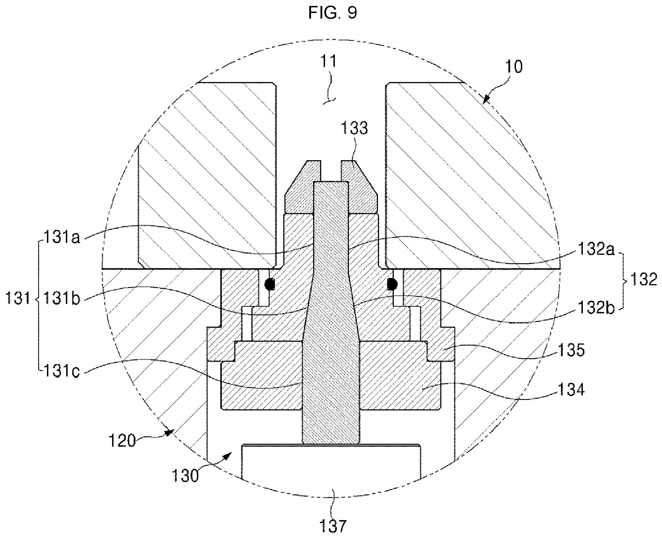

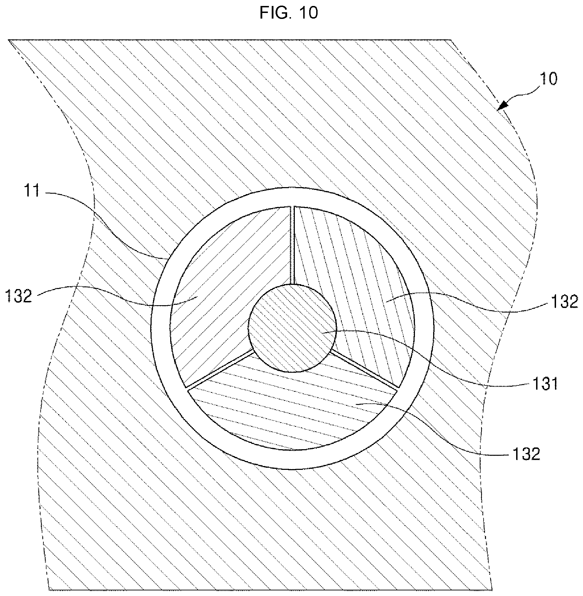

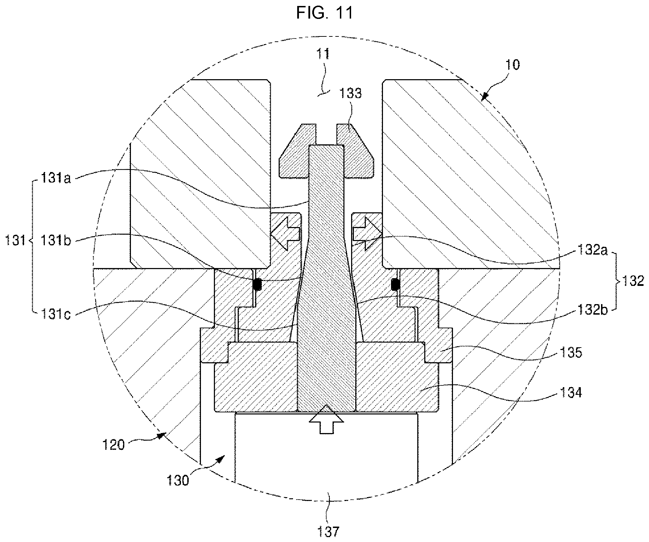

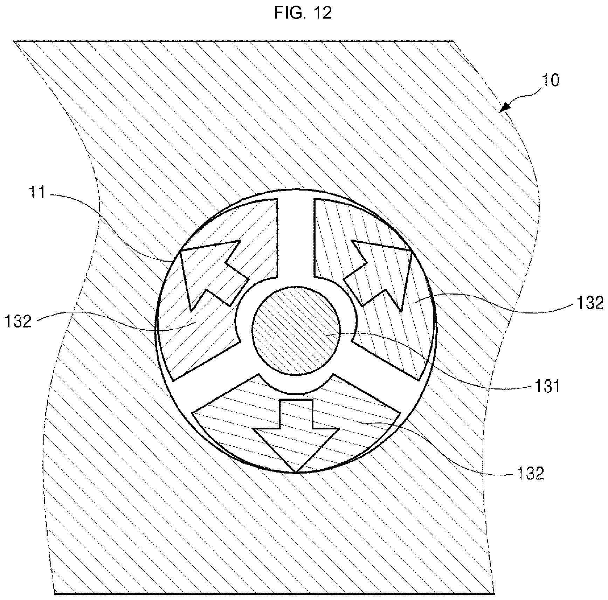

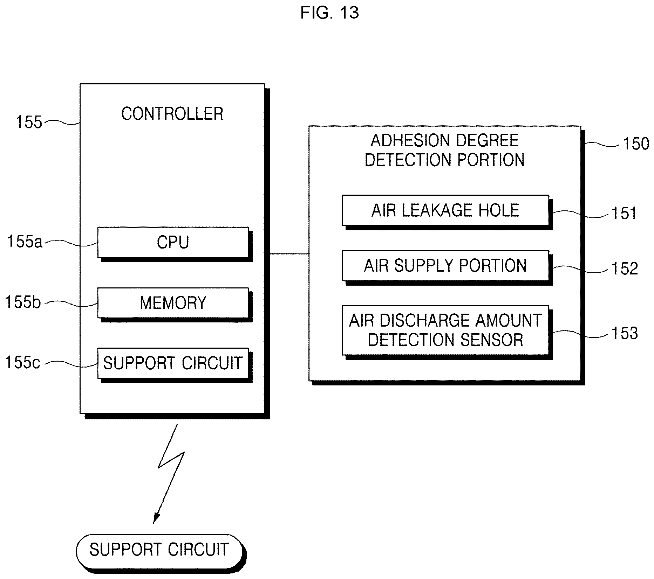

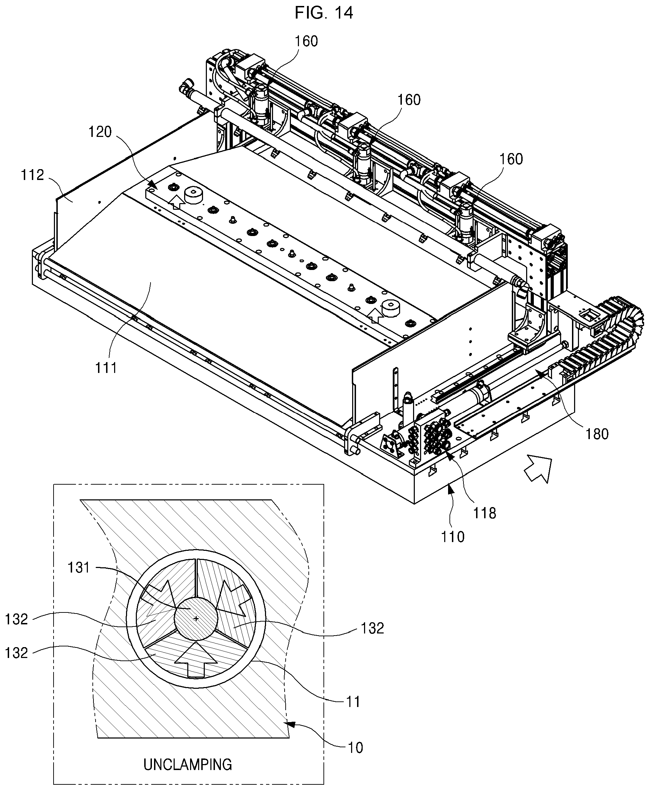

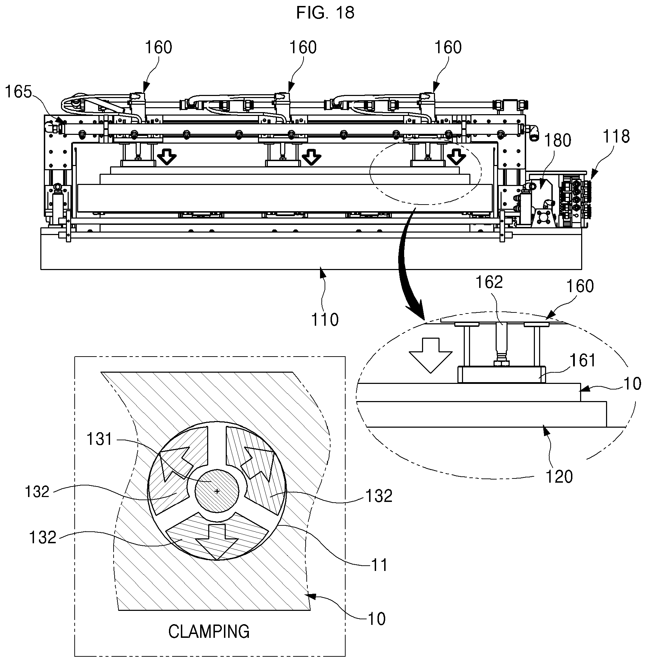

FIG. 2 is a perspective view of a device for automatically fixing a workpiece, according to an embodiment of the present inventive concept. FIG. 3 is a view illustrating FIG. 2 from a different angle while separating a workpiece cleaning unit. FIG. 4 is a partially cut-away perspective view of a jig base region. FIG. 5 is an enlarged view of a major part of FIG. 4. FIG. 6 is an enlarged view of a major part of FIG. 5. FIG. 7 is an enlarged view of a hole clamp and clamp driving portion region of FIG. 6. FIG. 8 is a partial cross-sectional view of FIG. 7, showing a state in which a workpiece is placed on a base state. FIG. 9 is an enlarged view of a major part of FIG. 8, showing a workpiece unclamping state. FIG. 10 is a cross-sectional view of a multi-divided jaw region of FIG. 9. FIG. 11 is an enlarged view of the major part of FIG. 8, showing a workpiece clamping state. FIG. 12 is a cross-sectional view of a multi-divided jaw region of FIG. 11. FIG. 13 is a control block diagram of a device for automatically fixing a workpiece, according to an embodiment of the present inventive concept. FIGS. 14 to 22 show an operation sequence of a device for automatically fixing a workpiece, according to an embodiment of the present inventive concept.

Referring to these drawings, a device for automatically fixing a workpiece, according to the present embodiment, may automatically implement a placing and fixing task of the workpiece 10 to place and fix the workpiece 10 at a machining position, away from an existing manual work, and thus, the overall automation of the workpiece 10 machining process linked with a machine tool is possible, thereby contributing to the enhancement of productivity.

Here, the workpiece 10, as described above, may be a bar type metal structure, as illustrated in (a) of FIG. 1, and the finished product 20 as illustrated in (b) of FIG. 1, may be machined by using the workpiece 10. In the present embodiment, the finished product 20 may be a rack that is a high precision product with a pin type thread portion 21 formed in one side thereof.

Of course, the device for automatically fixing a workpiece, according to the present embodiment, is not a device that directly machines the workpiece 10 as illustrated in (a) of FIG. 1 into the finished product 20 as illustrated in (b) of FIG. 1. In other words, an actual machining work for the workpiece 10 is performed by a machine tool, such as a machining center, on which the device for automatically fixing a workpiece, according to the present embodiment, is mounted.

As a result, the device for automatically fixing a workpiece, according to the present embodiment, corresponds to a device in units of units which are mountable on a bed of a machine tool, such as a machining center.

Meanwhile, as briefly described above, to improve productivity of the finished product 20 as illustrated in (b) of FIG. 1, it is expected that the automation of a series of entire processes, for example, a machining process is performed on the workpiece 10 after being placed and fixed at a machining position, and the like, may be necessary.

However, when the placing and fixing task of the workpiece 10, that is, placing and fixing the workpiece 10 at a machining position, is manually performed as before, the time takes too long so that implementation of the entire automation is not easy.

Nevertheless, unlike the related art, when the device for automatically fixing a workpiece, according to the present embodiment, is employed, the placing and fixing task of the workpiece 10, that is, a task to place and fix the workpiece 10 on a jig base 120 of the device for automatically fixing a workpiece, may be easily and quickly performed. Accordingly, as a great effect may be on the implementation of the entire automation linked with a machine tool, the device for automatically fixing a workpiece, according to the present embodiment, may serve as a very important role for machining automation.

For reference, in the present embodiment, although the workpiece 10 is a bar type metal structure as illustrated in (a) of FIG. 1, and the finished product 20 is a rack that is a high precision product as illustrated in (b) of FIG. 1, the workpiece 10 and the finished product 20 may have structures different from the drawings. Accordingly, the scope of right of the present inventive concept is not limited to the shapes of the drawings.

Referring to FIGS. 2 to 22, the device for automatically fixing a workpiece, according to the present embodiment, which places and fixes the workpiece 10 as illustrated in (a) of FIG. 1 at a machining position, may include a device table 110, a jig base 120 provided on the device table 110 and on which the workpiece 10 to be machined is placed and fixed, and a hole clamp 130 provided on the jig base 120 and clamping the workpiece 10 to fix the workpiece 10 placed on the jig base 120.

The device table 110 supports units, such as a mounting plate moving portion 180 and the like, including the jig base 120. The device table 110 may be mounted on a bed of a machine tool.

A base cover 111 and a side cover 112 are provided on the device table 110.

The base cover 111 covers the top portion of the device table 110, except for the jig base 120. Both sides of the base cover 111 may form inclined slopes. Accordingly, a machining fluid input during a machining work or particles such as chips delaminated from the workpiece 10 during machining may be prevented from being accumulated on the device table 110.

Side covers 112 are screens arranged at opposite sides of the base cover 111. The side covers 112 define a processing space with the base cover 111. In other words, scattering of a machining fluid or particles generated during a work may be prevented.

The jig base 120 is provided in one side of the device table 110 and forms a place where the workpiece 10 is placed and fixed to be machined into the finished product 20. In other words, after the workpiece 10 is placed and fixed on the jig base 120, the workpiece 10 may be machined into the finished product 20 on the jig base 120 by the operation of a machine tool. After machining is completed, the finished product 20 is taken out and a new workpiece 10 is placed and fixed on the jig base 120.

As such, as the workpiece 10 is placed and fixed on the jig base 120, for the placing and fixing task of the workpiece 10, a structure, such as the hole clamp 130, a positioning pin 141, a guide pin 143, and the like, is mounted on the jig base 120. The hole clamp 130, the positioning pin 141, and the guide pin 143 are each provided in plural in the jig base 120 for each position. The jig base 120 may be supported on a plurality of base supporting blocks 115 provided on the device table 110.

The hole clamp 130 is described first. The hole clamp 130 is coupled to the jig base 120 and inserted into a hole 11 formed in the workpiece 10 placed on the jig base 120 the workpiece 10 to serve to optionally clamp the hole 11. The hole 11 is formed in plural in the workpiece 10 to make a rack, and by using the holes 11, the position of the workpiece 10 may be fixed on the jig base 120.

The hole clamp 130 may be provided in plural along the lengthwise direction of the jig base 120. Only corresponding ones may be used among the hole clamps 130 depending on the size of the workpiece 10. The hole clamp 130 may include a clamp shaft 131 and multi-divided jaws (3-jaw) 132.

The clamp shaft 131 is arranged in a direction in which the workpiece 10 is placed on the jig base 120, and has a cross-sectional area differing in the lengthwise direction.

The multi-divided jaws 132 are arranged in the circumferential direction of the clamp shaft 131 and each move radially outward or inward based on an up/down movement operation of the clamp shaft 131 by the operation of a clamp driving portion 139, and when multi-divided jaws 132 move radially outward, the position of the workpiece 10 is fixed.

In other words, when the clamp shaft 131 performs an up operation, as illustrated in FIGS. 11 and 12, the multi-divided jaws 132 operate radially outward to clamp a wall surface of the hole 11 of the workpiece 10, and when the clamp shaft 131 performs a down operation, as illustrated in FIGS. 9 and 10, the multi-divided jaws 132 operates radially inward to unclamp the wall surface of the hole 11 of the workpiece 10.

For such an operation, the clamp shaft 131 is connected to the clamp driving portion 139. The clamp driving portion 139 is provided on the device table 110, connected to the clamp shaft 131 of the hole clamp 130, and drives the hole clamp 130 so that the multi-divided jaws 132 of the hole clamp 130 clamp or unclamp the wall surface of the hole 11 of the workpiece 10.

In the present embodiment, the clamp driving portion 139 may include a hydraulic cylinder that applies a strong force. Accordingly, the multi-divided jaws 132 may provide a strong force, and thus, the multi-divided jaws 132 may clamp the wall surface of the hole 11 of the workpiece 10 with a strong force.

An adaptor 137 is used to connect the clamp shaft 131 to the clamp driving portion 139. The adaptor 137 is a kind of medium that detachably connects the clamp shaft 131 to the clamp driving portion 139.

Meanwhile, as described above in FIGS. 9 and 10, in order for the multi-divided jaws 132 to operate radially outward so as to clamp the wall surface of the hole 11 of the workpiece 10 when the clamp shaft 131 performs an up operation, the clamp shaft 131 and the multi-divided jaws 132 are manufactured to have the following structures so that.

The clamp shaft 131 includes a reduced diameter section part 131a having a relatively small cross-sectional area, an enlarged diameter section part 131c arranged apart from the reduced diameter section part 131a in the lengthwise direction of the clamp shaft 131 and having a cross-sectional area greater than that of the reduced diameter section part 131a, and a slope connection section 131b connecting the reduced diameter section part 131a and the enlarged diameter section part 131c to be inclined with each other.

The inner walls of the multi-divided jaws 132 each include a straight-line wall part 132a that contacts the reduced diameter section part 131a, and an inclined line wall part 132b that contacts the slope connection section 131b.

Accordingly, in an unclamping state as illustrated in FIGS. 9 and 10, the clamp driving portion 139 operates to drive the clamp shaft 131 up. Then, as illustrated in FIGS. 11 and 12, the slope connection section 131b and the enlarged diameter section part 131c of the clamp shaft 131 are forcibly moved toward the straight-line wall part 132a of each of the inner walls of the multi-divided jaws 132. Due to the operation, the multi-divided jaws 132 operate radially outward so as to clamp the wall surface of the hole 11 of the workpiece 10. Accordingly, the workpiece 10 may be placed and fixed on the jig base 120.

In addition to the structure described above, the hole clamp 130 further includes a guide cap 133, a clamp end cap 134, and a clamp housing 135.

The guide cap 133 is provided in an end portion of the clamp shaft 131, and guides the clamp shaft 131 to be inserted into the hole 11 of the workpiece 10. In other words, a leading end portion of the guide cap 133 has an inclined shape, which assists the clamp shaft 131 to be inserted into the hole 11 of the workpiece 10.

The clamp end cap 134 is a structure that movably supports the multi-divided jaws 132 at the opposite side of the guide cap 133.

The clamp housing 135 is a structure that is arranged radially outside the multi-divided jaws 132 to be fixed on the jig base 120 and movably supports the multi-divided jaws 132 with the clamp end cap 134. An O-ring 136 is provided between the multi-divided jaws 132 and the clamp housing 135 to prevent collision between the structures.

Next, the positioning pin 141 is coupled to the jig base 120 around the hole clamp 130, and when the workpiece 10 is placed on the jig base 120, serves to perform positioning a relative location of the workpiece 10 with respect to the jig base 120.

Unlike the hole clamp 130 and the guide pin 143 moving up and down, the positioning pin 141 performs positioning a relative location of the workpiece 10 with respect to the jig base 120 at a corresponding position. Accordingly, the positioning pin 141 may be also provided in plural on the jig base 120. The positioning pin 141 may have a shape that tapers toward an end thereof.

Next, the guide pin 143 is arranged in the jig base 120 around the hole clamp 130 to be movable up/down and serves to guide the movement of the workpiece 10 with respect to the jig base 120.

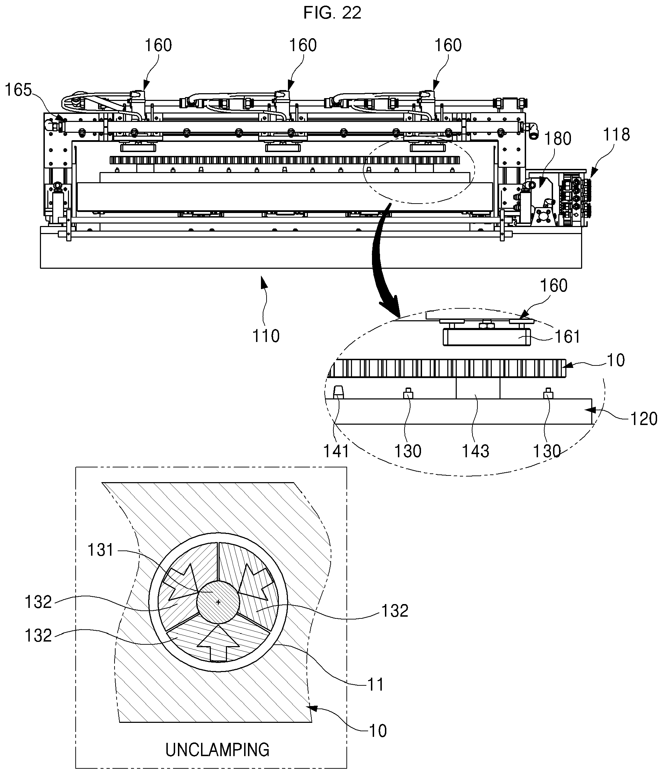

The workpiece 10 or the finished product 20 may be moved up/down by the guide pin 143. In other words, when the guide pin 143 performs an up operation, the workpiece 10 is placed on the guide pin 143, and then, the guide pin 143 performs a down operation so that the workpiece 10 may be placed on the jig base 120. Furthermore, in order to take out the finished product 20 that has completed machining, as illustrated in FIG. 22, the guide pin 143 may perform an up operation. Of course, during the operation of FIG. 22, the hole clamp 130 is in an unclamping state.

A guide driving portion 145 is provided for the operation of the guide pin 143. The guide driving portion 145 is provided on the device table 110, is connected to the guide pin 143, and serves to drive the guide pin 143 up/down. Unlike the clamp driving portion 139 needing a strong force, not so strong force is needed for the up/down driving of the guide pin 143, and thus, the guide driving portion 145 may include a pneumatic cylinder.

Meanwhile, in order to perform a substantial machining work by a machine tool, the workpiece 10 needs to be placed and fixed on the jig base 120 to be in close contact therewith, otherwise the finished product 20 with high precision may not be obtained.

Accordingly, the device for automatically fixing a workpiece, according to the present embodiment further includes an adhesion degree detection portion 150. The adhesion degree detection portion 150 is provided in a region of the jig base 120, and before the machining work of the workpiece 10 is performed, serves to detect the degree of adhesion of the workpiece 10 to the jig base 120.

The adhesion degree detection portion 150 includes an air leakage hole 151 formed in the jig base 120 along a direction in which the workpiece 10 is placed on the jig base 120, an air supply portion 152 for supplying air to the air leakage hole 151, an air discharge amount detection sensor 153 for detecting an amount of air discharged through the air leakage hole 151, and a controller 155.

The air leakage hole 151 may be formed in the jig base 120 by hole machining. The air supply portion 152 and the air discharge amount detection sensor 153 may be arranged on the device table 110 neighboring the jig base 120.

The controller 155 controls the operation of a machine tool that machines the workpiece 10 to be forcibly stopped, based on a sensing signal of the air discharge amount detection sensor 153. For example, when the workpiece 10 is appropriately placed and fixed on the jig base 120, the amount of air discharged to the air leakage hole 151 may be less than a reference value or there may be no air. However, when the workpiece 10 is clamped on the jig base 120, but not properly placed and fixed thereon, the amount of air discharged to the air leakage hole 151 may be increased compared with the reference value. In this case, the controller 155 controls the machine tool not to operate.

The controller 155 performing the above role may include a central processing unit (CPU) 155a, a memory 155b, and a support circuit 155c.

The CPU 155a may be one of various computer processors that are industrially applicable to control the operation of a machine tool that machines the workpiece 10 to be forcibly stopped, based on the sensing signal of the air discharge amount detection sensor 153 in the present embodiment.

The memory 155b is connected to the CPU 155a. The memory 155b, as a computer-readable recording medium, may be installed locally or remotely, and may be at least one or more memories that are easily usable, for example, random access memory (RAM), read only memory (ROM), floppy disk, hard disk, or a digital storage format.

The support circuit 155c is coupled to the CPU 155a and supports a typical operation of a processor. The support circuit 155c may include a cache, a power supply, a clock circuit, an input/output circuit, a subsystem, and the like.

In the present embodiment, the controller 155 may control the operation of a machine tool that machines the workpiece 10 to be forcibly stopped, based on the sensing signal of the air discharge amount detection sensor 153. Such a series of control processes and the like may be stored in the memory 155b. Typically, a software routine may be stored in the memory 155b. The software routine may be stored or executed by another CPU (not shown).

Although the process according to the present inventive concept is described as being executed by a software routine, at least a part of the processes of the present inventive concept may be performed by hardware. As such, the processes of the present inventive concept may be implemented by software performed on a computer system, hardware such as an integrated circuit, or a combination of software and hardware.

Meanwhile, as described above, the workpiece 10 is clamped by the operation of the hole clamp 130 and fixed on the jig base 120, and in this state, the workpiece 10 is in close contact with the jig base 120. To do so, there is a need to press the workpiece 10 toward the jig base 120 when the hole clamp 130 is operated. To this end, a workpiece pressing unit 160 is provided.

The workpiece pressing unit 160 is arranged in one side of the device table 110, and serves to press the workpiece 10 toward the jig base 120 before the workpiece 10 is clamped and fixed on the jig base 120.

The workpiece pressing unit 160 may include a workpiece pressing block 161 substantially in contact with the workpiece 10 and pressing the workpiece 10 toward the jig base 120, and a block up/down driving portion 162 connected to the workpiece pressing block 161 and driving the workpiece pressing block 161 up/down. The block up/down driving portion 162 may employ a pneumatic cylinder.

A workpiece cleaning unit 165 is further mounted on the device for automatically fixing a workpiece. The workpiece cleaning unit 165 is arranged adjacent to the workpiece pressing unit 160, and serves to clean the workpiece 10 or the finished product 20 by blowing air toward the workpiece 10 or the finished product 20 formed from the workpiece 10.

In other words, when the workpiece 10 is machined into the finished product 20 by the operation of a machine tool, as illustrated in FIG. 22, foreign materials, such as chips and the like, may be accumulated on or a processing liquid may adhere to the finished product 20, and the workpiece cleaning unit 165 is provided to remove the foreign materials or processing liquid. Of course, the workpiece 10 before processing may be cleaned, which is optional.

The workpiece cleaning unit 16 may include an air supply pipe 166 arranged elongated in the lengthwise direction of the jig base 120 and suppling air, and a plurality of air nozzles 167 provided in the air supply pipe 166 and through which air flowing in the air supply pipe 166 is blown toward the workpiece 10 or the finished product 20.

The workpiece cleaning unit 165 may blow air in place, as illustrated in FIG. 22, or by approaching the jig base 120 toward the area of the workpiece 10. In the case of the present embodiment, the embodiment of blowing air in place as illustrated in FIG. 22.

As such, although the workpiece cleaning unit 165 may blow air in place or by approaching the jig base 120, the workpiece pressing unit 160 needs to approach the jig base 120 and then press the workpiece 10 at the position. To do so, a device to move the workpiece pressing unit 160 is necessary, and to this end, a unit mounting plate 170 and the mounting plate moving portion 180 are provided.

The unit mounting plate 170 has a structure on which both the workpiece pressing unit 160 and the workpiece cleaning unit 165 are mounted. The mounting plate moving portion 180 is provided on the device table 110 and connected to the unit mounting plate 170, and serves to move the unit mounting plate 170 on the device table 110.

While the workpiece cleaning unit 165 is fixed at a certain position, the position of the workpiece pressing unit 160 only may be moved. In this case, equipment may be complicated. Accordingly, the present embodiment employs a method in which, while the unit mounting plate 170 is provided, both of the workpiece pressing unit 160 and the workpiece cleaning unit 165 are mounted on the unit mounting plate 170, and then, the unit mounting plate 170 is moved.

A unit separation support 171 is further provided on the unit mounting plate 170. One end portion of the unit separation support 171 is fixed on the unit mounting plate 170 and the other end portion is connected to the workpiece cleaning unit 165, so as to support the workpiece cleaning unit 165 apart from the unit mounting plate 170 with the workpiece pressing unit 160 therebetween. The unit separation support 171 is a kind of bracket, and includes in plural to support the air supply pipe 166 of the workpiece cleaning unit 165.

The mounting plate moving portion 180 may include a rail 181 provided on the device table 110 in a direction in which the unit mounting plate 170 moves and to which the unit mounting plate 170 is movably connected, a moving block 182 connected to the unit mounting plate 170, and a forward and backward driving cylinder 183 coupled to the device table 110, connected to the moving block 182, and providing a driving force to move the unit mounting plate 170 on the rail 181.

The forward and backward driving cylinder 183 may be a hydraulic cylinder. The forward and backward driving cylinder 183 includes a cylinder main body 183a fixed on the device table 110, and takes a form of being connected to the cylinder main body 183a to be extended or contracted in a lengthwise direction and having an end portion coupled to the moving block 182 having one end connected to the cylinder main body 183a to be extended or contracted in a lengthwise direction and the other end coupled to the moving block 182.

As hydraulic or pneumatic pressure is used in many places in the device for automatically fixing a workpiece of the present embodiment, a hydraulic or pneumatic distributor 118 may be installed on the device table 110 neighboring the forward and backward driving cylinder 183.

A series of processes of placing and fixing the workpiece 10 on the jig base 120 and then machining the workpiece 10 into the finished product 20 are described below with reference to FIGS. 14 to 22.

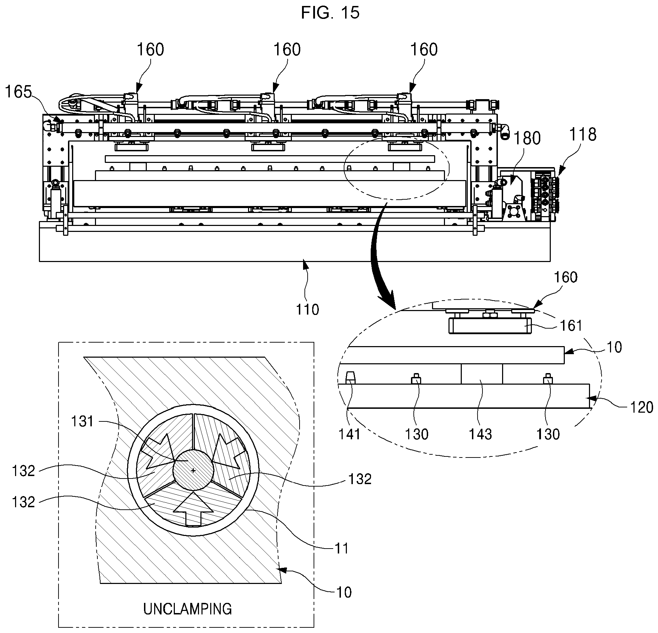

First, in an initial state as illustrated in FIG. 14, the workpiece 10 is supplied to the jig base 120 as illustrated in FIG. 15. This state is a state in which the guide pin 143 performs an up operation, and in this state, the workpiece 10 is placed on the guide pin 143 by a robot and the like.

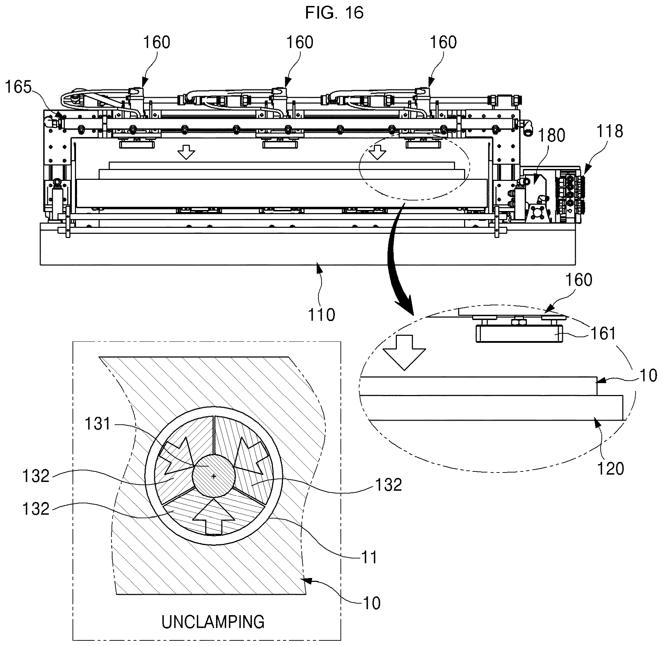

Next, as illustrated in FIG. 16, the workpiece 10 may be placed on the jig base 120 by the down operation of the guide pin 143. In this state, some of the holes 11 of the workpiece 10 may be guided by the positioning pins 141, and some of the hole clamps 130 are inserted into the other holes 11. Of course, the hole clamp 130 is still in an unclamping state.

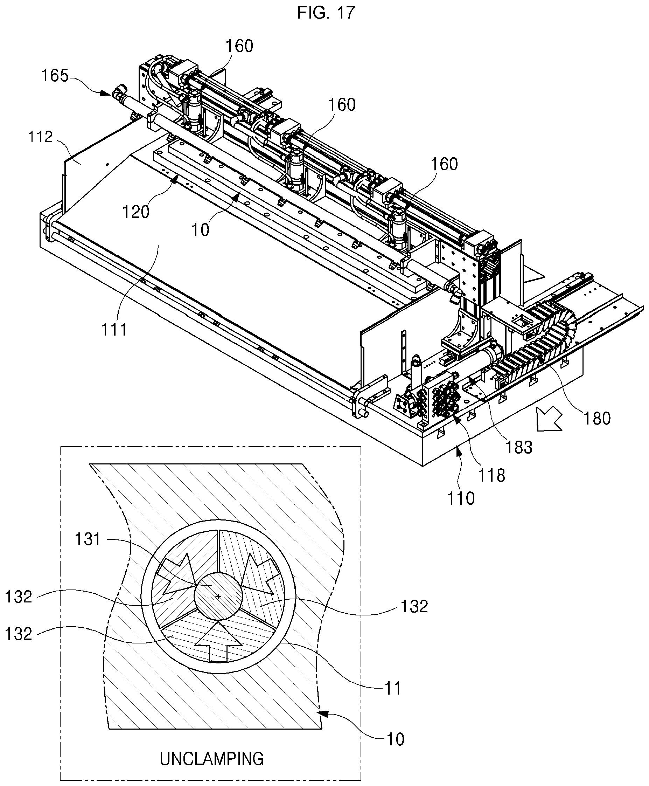

Next, as illustrated in FIG. 17, the mounting plate moving portion 180 operates. In other words, the unit mounting plate 170 moves backward by the operation of the forward and backward driving cylinder 183. Then, the workpiece pressing block 161 of the workpiece pressing unit 160 is located above the workpiece 10.

Next, as the block up/down driving portion 162 of the workpiece pressing unit 160 operates, the workpiece pressing block 161 presses the workpiece 10 toward the jig base 120. Then, the workpiece 10 is clamped by the operation of the hole clamp 130 by the operation of the clamp driving portion 139. In other words, in the unclamping state as illustrated in FIGS. 9 and 10, the clamp driving portion 139 operates to drive the clamp shaft 131 up. Then, as illustrated in FIGS. 11 and 12, the slope connection section 131b and the enlarged diameter section part 131c of the clamp shaft 131 are forcibly moved toward the straight-line wall part 132a of the inner walls of the multi-divided jaws 132, and accordingly, the multi-divided jaws 132 are operated radially outward so that the wall surface of the hole 11 of the workpiece 10 may be clamped. In particular, when the workpiece pressing block 161 presses the workpiece 10 toward the jig base 120, a clamping task of the workpiece 10 is performed so that precision clamping of the workpiece 10 may be made.

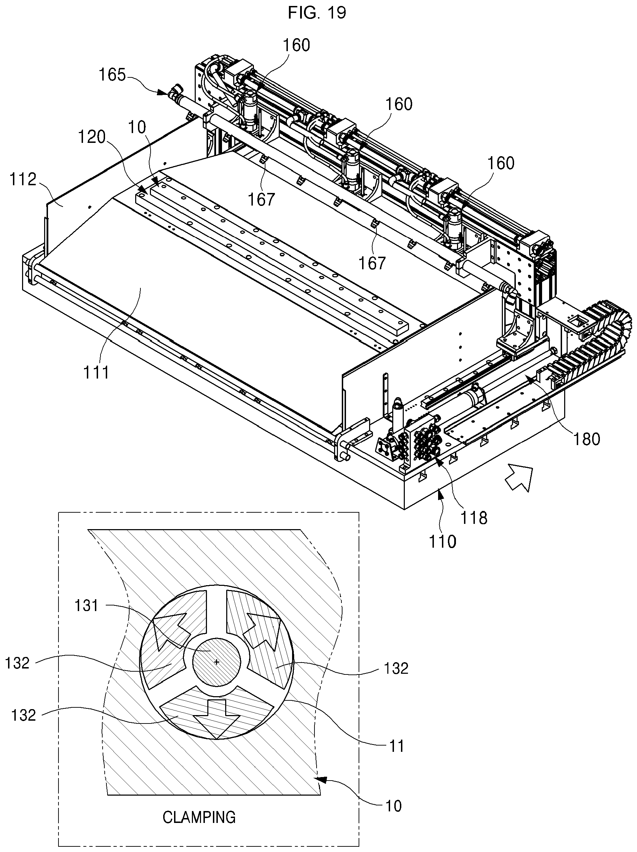

Next, as illustrated in FIG. 19, as the mounting plate moving portion 180 operates, the unit mounting plate 170 is advanced to move to the original position by the operation of the forward and backward driving cylinder 183. In this state, the workpiece 10 is continuously in the clamping state by the hole clamp 130.

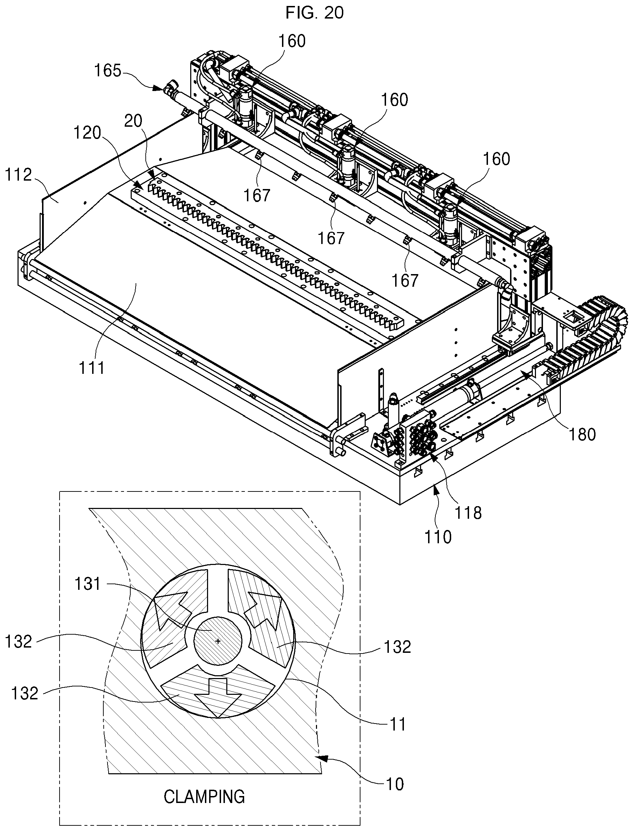

Next, as illustrated in FIG. 20, machining work is performed on the workpiece 10. As described above, the machining work is performed through a machine tool equipped with the device for automatically fixing a workpiece, according to the present embodiment.

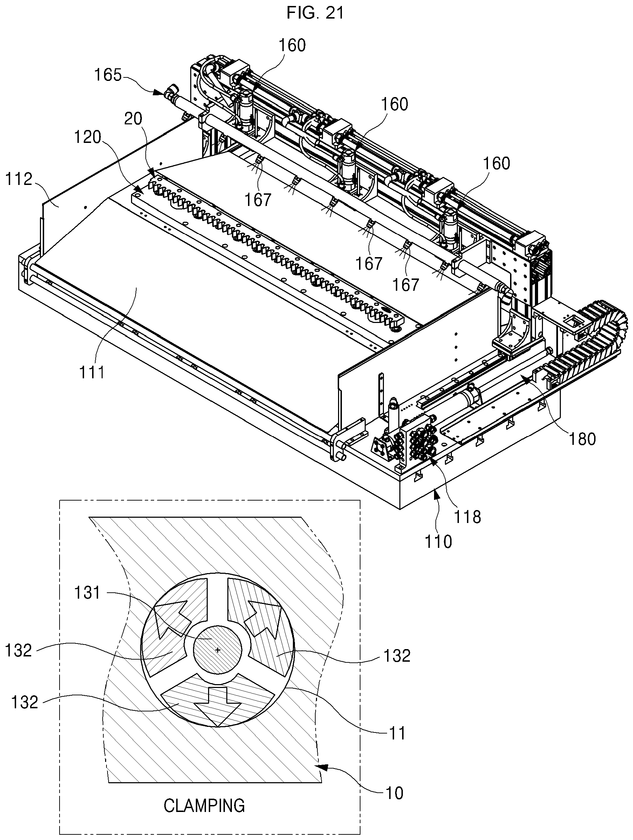

Next, as illustrated in FIG. 21, a cleaning process is performed. When the workpiece 10 is machined into the finished product 20 by the operation of the machine tool in the previous process, foreign materials such as chips and the like may be accumulated on or a processing liquid may adhere to the finished product 20, and to remove them, the workpiece cleaning unit 165 operates. In other words, as air is blown through the air nozzles 167 of the workpiece cleaning unit 165, the finished product 20 may be cleaned.

Next, after the hole clamp 130 is unclamped by the operation of the clamp driving portion 139, as illustrated in FIG. 22, the guide pin 143 performs an up operation. Then, the finished product 20 may be separated upward from the jig base 120, and in this state, a robot takes out the finished product 20. After the taking out, a new workpiece is supplied again and the process described above is repeated in the same manner.

According to the structure and operation of the present embodiment described above, the placing and fixing task of the workpiece 10 to place and fix the workpiece 10 at a machining position may be automatically implemented, away from an existing manual work, and thus, the overall automation of the workpiece 10 machining process linked with a machine tool is possible, thereby contributing to the enhancement of productivity.

While the present inventive concept has been described with respect to specific embodiments thereof, it will be apparent to those skilled in the art that various changes and modifications may be made without departing from the spirit and scope of the invention as defined in the following claims.

### INDUSTRIAL APPLICABILITY

The present inventive concept may be used in the field of machine tool manufacturing industry.

## Claims

1. A device for automatically fixing a workpiece, the device comprising:
- a jig base provided in one side of a device table, and forming a place where the workpiece is placed and fixed to be machined into a finished product;
- a hole clamp coupled to the jig base and inserted into a hole formed in the workpiece placed on the jig base to selectively clamp the hole; and
- a clamp driving portion provided on the device table, connected to the hole clamp, and driving the hole clamp to clamp or unclamp the hole of the workpiece.

2. The device of claim 1, wherein the hole clamp comprises:
- a clamp shaft arranged on the jig base in a direction in which the workpiece is placed and having a cross-sectional area differing in a lengthwise direction; and
- multi-divided jaws (3-jaw) arranged in a circumferential direction of the clamp shaft, moving radially outward or inward based on an up/down movement operation of the clamp shaft by an operation of the clamp driving portion, and fixing a position of the workpiece when moving radially outward.

3. The device of claim 2, wherein the clamp shaft comprises:
- a reduced diameter section part having a relatively small cross-sectional area;
- an enlarged diameter section part arranged apart from the reduced diameter section part in the lengthwise direction of the clamp shaft and having a cross-sectional area greater than a cross-sectional area of the reduced diameter section part; and
- a slope connection section connecting the reduced diameter section part and the enlarged diameter section part to be inclined with each other,
- an inner wall of each of the multi-divided jaws comprises:
- a straight-line wall part in contact with the reduced diameter section part; and
- an inclined line wall part in contact with the slope connection section, and
- the position of the workpiece is fixed when the enlarged diameter section part of the clamp shaft enters the inclined line wall part of each of the multi-divided jaws as the clamp shaft moves up by the operation of the clamp driving portion

4. The device of claim 2, wherein the hole clamp further comprises:
- a guide cap provided in an end portion of the clamp shaft and guiding the clamp shaft to be inserted into the hole of the workpiece; and
- a clamp end cap movably supporting the multi-divided jaws at an opposite side of the guide cap.

5. The device of claim 4, wherein the hole clamp further comprises:
- a clamp housing arranged radially outside the multi-divided jaws, fixed on the jig base, and movably supporting the multi-divided jaws with the clamp end cap;
- an O-ring arranged between the multi-divided jaws and the clamp housing; and
- an adaptor detachably connecting the clamp shaft to the clamp driving portion.

6. The device of claim 1, further comprising a positioning pin that is coupled to the jig base around the hole clamp and performs positioning a relative location of the workpiece with respect to the jig base when the workpiece is placed on the jig base.

7. The device of claim 1, further comprising:
- a guide pin arranged on the jig base to be capable of moving up/down around the hole clamp, and guiding a movement of the workpiece with respect to the jig base; and
- a guide driving portion provided on the device table, connected to the guide pin, and driving the guide pin up/down.

8. The device of claim 1, further comprising an adhesion degree detection portion that is provided in a region of the jig base, and before a machining work of the workpiece is performed, detects a degree of adhesion of the workpiece to the jig base.

9. The device of claim 8, wherein the adhesion degree detection portion comprises:
- an air leakage hole formed in the jig base in a direction in which the workpiece is placed on the jig base;
- an air supply portion supplying air to the air leakage hole; and
- an air discharge amount detection sensor detecting an amount of air discharged through the air leakage hole.

10. The device of claim 9, wherein the adhesion degree detection portion further comprises a controller that is configured to control an operation of a machine tool that machines the workpiece, to be forcibly stopped, based on a sensing signal of the air discharge amount detection sensor.

11. The device of claim 1, further comprising a workpiece pressing unit that is arranged in one side of the device table and presses the workpiece toward the jig base before the workpiece is clamped and fixed on the jig base.

12. The device of claim 11, wherein the workpiece pressing unit comprises:
- a workpiece pressing block substantially contacting the workpiece and pressing the workpiece toward the jig base; and
- a block up/down driving portion connected to the workpiece pressing block and driving the workpiece pressing block up/down.

13. The device of claim 11, further comprising a workpiece cleaning unit that is arranged adjacent to the workpiece pressing unit, and cleans the workpiece or a finished product formed from the workpiece by blowing air toward the workpiece or the finished product.

14. The device of claim 13, wherein the workpiece cleaning unit comprises:
- an air supply pipe arranged elongated in a lengthwise direction of the jig base and supplying the air; and
- a plurality of air nozzles provided in the air supply pipe and blowing the air flowing in the air supply pipe toward the workpiece.

15. The device of claim 13, further comprising:
- a unit mounting plate on which the workpiece pressing unit and the workpiece cleaning unit are mounted together; and
- a mounting plate moving portion provided on the device table, connected to the unit mounting plate, and moving the unit mounting plate on the device table.

16. The device of claim 15, further comprising a unit separation support that has one end portion fixed on the unit mounting plate and the other end portion connected to the workpiece cleaning unit, and supports the workpiece cleaning unit apart from the unit mounting plate with the workpiece pressing unit therebetween.

17. The device of claim 15, wherein the mounting plate moving portion comprises:
- a rail provided on the device table in a direction in which the unit mounting plate moves and to which the unit mounting plate is movably connected;
- a moving block connected to the unit mounting plate; and
- a forward and backward driving cylinder coupled to the device table, connected to the moving block, and providing a driving force to move the unit mounting plate on the rail.

18. The device of claim 1, further comprising:
- a base cover covering a top portion of the device table, except the jig base; and
- a plurality of side covers arranged at opposite sides of the base cover and forming a processing space with the base cover.

19. The device of claim 18, wherein both sides of the base cover form inclined slopes, and the device table is mounted on a bed of a machine tool.
